# FASCICULE DE BREVET EUROPEEN

(11) **EP 3 837 495 B1**
(45) Date de publication et mention de la délivrance du brevet: **03.06.2026**
(21) Numéro de dépôt: 19758431.1
(22) Date de dépôt: 12.07.2019
(51) Int. Cl.: G01C 21/36

(54) **PROCÉDÉ DE DÉTERMINATION D'UNE VALEUR REPRÉSENTATIVE D'UN PARAMÈTRE CONTEXTUEL EN REGARD D'UNE SUGGESTION DE DESTINATION FOURNIE PAR UN SYSTÈME DE NAVIGATION POUR UN VÉHICULE TERRESTRE À MOTEUR**
VERFAHREN ZUR BESTIMMUNG EINES FÜR EINEN KONTEXTPARAMETER REPRÄSENTATIVEN WERTES IN BEZUG AUF EINEN ZIELVORSCHLAG EINES NAVIGATIONSSYSTEMS FÜR EIN MOTORISIERTES TERRESTRISCHES FAHRZEUG
METHOD FOR DETERMINING A VALUE REPRESENTATIVE OF A CONTEXTUAL PARAMETER IN REGARD TO A DESTINATION SUGGESTION PROVIDED BY A NAVIGATION SYSTEM FOR A MOTORIZED TERRESTRIAL VEHICLE

(30) Priorité: 13.08.2018 FR 1857472
(43) Date de publication de la demande: 23.06.2021
(73) Titulaire: Stellantis Auto SAS, 78300 Poissy (FR)
(72) Inventeur: HENO, Thomas, 92370 CHAVILLE (FR)
(74) Mandataire: ESIP
(86) Numéro de dépôt international: PCT/FR2019/051753
(87) Numéro de publication internationale: WO 2020/035643

(56) Documents cités:
- US-A1- 2014 278 051
- US-A1- 2015 260 531
- US-A1- 2018 164 108

## Description

La présente invention concerne le domaine des systèmes de navigation pour des véhicules terrestres à moteur. L'invention porte en particulier sur un procédé de détermination d'au moins une valeur représentative d'au moins un paramètre contextuel en regard d'une suggestion de destination fournie par un système de navigation pour un véhicule terrestre à moteur. L'invention s'applique notamment aux véhicules automobiles.

Aujourd'hui, les systèmes de navigation pour véhicules terrestres à moteur incluent des fonctionnalités de prédiction de destinations, basées notamment sur des mécanismes d'apprentissage automatique qui, entre autres, permettent de déterminer les destinations les plus probables compte-tenu, par exemple, d'une localisation de départ connue et d'une date (et heure) donnée. Ces prédictions se basent généralement sur l'historique des trajets connus et recherchent les destinations les plus souvent atteintes dans les mêmes conditions de départ.

Cependant, le taux de réussite des algorithmes de prédiction n'est pas de 100%. Des erreurs peuvent se présenter, en particulier au début de la phase d'apprentissage, et ce même lorsque des dispositions prises assurent, par exemple, qu'une proposition n'est pas faite en cas de probabilité calculée trop faible.

Or, un élément clé pour l'acceptation par un utilisateur de tout système basé sur de l'intelligence artificielle est lié à la capacité qu'a l'utilisateur de suivre et comprendre ce qui a été appris par la machine. On constate donc qu'il existe un besoin de formuler les propositions et résultats fournis par de tels systèmes conjointement avec des éléments explicatifs ou contextuels qui visent à permettre à un utilisateur de comprendre le raisonnement mis en œuvre et, le cas échéant, les raisons d'éventuelles erreurs. Ces éléments informatifs additionnels contribuent en effet à inciter l'utilisateur à être plus compréhensif vis-à-vis des erreurs et à l'écoute des progrès. C'est au prix de telles fonctionnalités qu'un meilleur taux d'acceptation des mécanismes d'intelligence artificielle par les utilisateurs finaux peut être atteint. Ainsi, les systèmes de navigation actuels qui ne prennent pas en compte de tels aspects et fournissent des prédictions de destination sans y adjoindre des éléments informatifs permettant à l'utilisateur de comprendre le cadre du raisonnement mis en œuvre présentent certains désavantages en matière d'interaction homme-machine.

L'invention vise à palier à ces inconvénients. L'invention a en particulier pour but de fournir un procédé qui est apte à mettre en lien une prédiction de destination avec une indication contextuelle qui est présentée à un utilisateur par le bais d'un système de navigation d'un véhicule terrestre à moteur. Plus spécifiquement, l'invention a pour but de fournir un procédé qui permet que toute suggestion qui est faite sur la base de la mise en œuvre de mécanismes d'intelligence artificielle soit agrémentée d'au moins une indication contextuelle pertinente qui permet à l'utilisateur de comprendre le raisonnement qui a induit telle ou telle suggestion. L'invention a aussi pour but de fournir un procédé qui sait extraire certains paramètres distinctifs influents en regard de résultats fournis en utilisant des mécanismes d'apprentissage automatique et de traiter ces paramètres distinctifs pour fournir des informations explicatives utiles pour l'utilisateur.

A cet effet, l'invention a pour objet un procédé de détermination par un système informatique d'au moins une valeur représentative d'au moins un paramètre contextuel en regard d'une suggestion de destination fournie par un système de navigation pour un véhicule terrestre à moteur, le procédé comprenant les étapes de :
- constituer des données de fonctionnement, lesdites données de fonctionnement étant générées suite à l'émission d'au moins un signal par au moins un premier capteur agencé dans le véhicule et configuré pour émettre un signal en fonction d'un régime de fonctionnement du véhicule,
- recevoir des données de localisation, lesdites données de localisation étant transmises par un système de positionnement par satellite et/ou une source de données distante,
- constituer des données d'identification relatives à au moins un passager du véhicule, lesdites données d'identification étant en partie générées suite à l'émission d'un signal par au moins un deuxième capteur agencé dans le véhicule et configuré pour émettre un signal en fonction d'au moins une composante d'une condition physique dudit passager,
- transmettre lesdites données de fonctionnement, lesdites données de localisation et lesdites données d'identification à un module d'apprentissage automatique qui, sur la base desdites données de fonctionnement, desdites données de localisation et desdites données d'identification, établit un modèle prédictif apte à traiter au moins un paramètre d'entrée,
- utiliser le modèle prédictif pour déterminer ladite suggestion,
- déterminer au moins un paramètre distinctif en lien avec ladite suggestion, et
- déterminer la valeur représentative en utilisant le paramètre distinctif.

Selon une variante, le procédé peut comprendre une étape d'utilisation de la valeur représentative pour déterminer une indication contextuelle.

Selon une autre variante, le procédé peut comprendre une étape d'interaction avec une interface de diffusion d'information apte à prendre en charge l'indication contextuelle pour produire un message sonore et/ou une animation.

Selon une autre variante, ladite interface de diffusion d'information peut faire partie intégrante dudit système de navigation.

Selon une autre variante, l'étape de détermination du paramètre distinctif peut comprendre une étape consistant à faire varier le paramètre d'entrée.

Selon une autre variante, l'étape d'utilisation du modèle prédictif peut comprendre une étape d'utilisation des données de localisation pour mettre à jour ladite suggestion.

L'invention a en outre pour objet un système informatique de détermination d'au moins une valeur représentative d'au moins un paramètre contextuel en regard d'une suggestion de destination fournie par un système de navigation pour un véhicule terrestre à moteur dans lequel sont agencés au moins un premier capteur configuré pour émettre un signal en fonction d'un régime de fonctionnement du véhicule, au moins un deuxième capteur configuré pour émettre un signal en fonction d'au moins une composante d'une condition physique d'un passager, un récepteur pour recevoir des données de localisation fournies par un système de positionnement par satellites et permettant la détermination horodatée de la position géographique du véhicule et un moyen d'émission et de réception de signaux radiofréquences pour communiquer avec un serveur distant et/ou un appareil électronique portable, le système comprenant des moyens de mise en œuvre d'un procédé tel que défini ci-dessus.

Selon une variante, le système peut comprendre une unité de calcul, un module d'apprentissage automatique et des moyens de stockage dans lesquels sont stockés au moins un programme pour l'exécution d'étapes du procédé de détermination tel que défini ci-dessus.

L'invention a en outre pour objet un programme d'ordinateur comprenant des instructions pour l'exécution des étapes d'un procédé tel que défini ci-dessus.

L'invention a en outre pour objet un véhicule comprenant un système tel que défini ci-dessus.

D'autres caractéristiques et avantages de l'invention apparaîtront à l'examen de la description détaillée ci-après, et des dessins annexés, sur lesquels :
- la figure 1 est un schéma bloc d'un système de détermination selon l'invention, et
- la figure 2 est un organigramme illustrant certaines étapes d'un procédé de détermination selon l'invention.

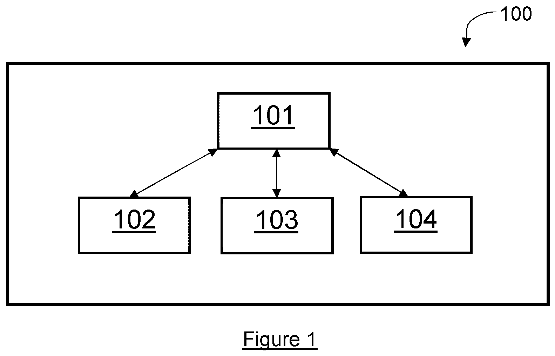

Le système de détermination 100 selon la présente invention est illustré sur la figure **1****.** Le système comprend une unité de traitement d'information 101 comprenant un ou plusieurs processeurs, des moyens de stockage de données 102, des moyens d'entrée et sortie 103 et un module d'apprentissage automatique 104. Selon certains modes de réalisation, le système 100 est embarqué dans un véhicule terrestre à moteur et est distribué parmi un ou plusieurs calculateurs. Selon d'autres modes de réalisation de l'invention, le système 100 comprend un ou plusieurs ordinateurs, un ou plusieurs serveurs, un ou plusieurs supercalculateurs et/ou n'importe quelle combinaison comprenant l'un de ces systèmes informatiques. On peut également envisager certains modes de réalisation dans lesquels certains éléments du système 100 sont hébergés en partie à bord d'un véhicule terrestre à moteur, sur un ou plusieurs calculateurs, alors que d'autres éléments sont répartis sur un ou plusieurs serveurs distants.

Quelle que soit la configuration retenue, le système 100 est apte à interagir avec un véhicule, notamment pour extraire et/ou recevoir des données générées par un ou plusieurs capteurs agencés dans le véhicule. Avantageusement, le système 100 interagit en réalité avec tout système intégré au véhicule, notamment les systèmes et capteurs permettant l'identification du conducteur et d'éventuels passagers additionnels, ainsi que l'analyse de leur condition physique. Pour certaines tâches, le système 100 interagit, par exemple par le biais de ses moyens d'entrée et sortie 103, avec un récepteur d'un système de positionnement par satellites du véhicule, avec le système de navigation embarqué du véhicule et/ou avec un émetteur/récepteur de signaux radiofréquences du véhicule, notamment pour extraire des données depuis un ou plusieurs serveurs distants.

En outre, tous ces éléments contribuent pour permettre au système 100 de mettre en œuvre un procédé de détermination d'au moins une valeur représentative d'au moins un paramètre contextuel en regard d'une suggestion de destination fournie par un système de navigation pour un véhicule terrestre à moteur.

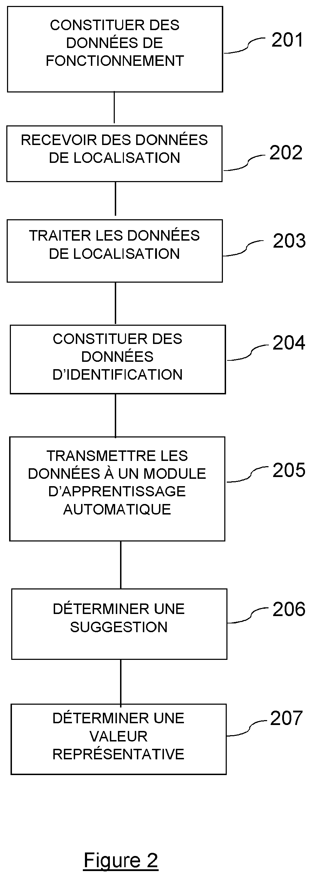

Comme illustré à la figure 2, selon une étape 201, le système 100 constitue, i.e. extrait, enregistre et/ou établit, des données de fonctionnement. Les données de fonctionnement sont générées lorsque l'un des capteurs agencés dans le véhicule émet un signal en fonction d'un régime de fonctionnement du véhicule. Par exemple, lors de chaque trajet, des données de fonctionnement sont générées selon les signaux reçus de capteurs qui sont aptes à émettre des signaux en fonction du niveau de carburant dans le réservoir, en fonction du niveau de charge d'une batterie, en fonction de la luminosité ambiante, en fonction de la présence de gouttes sur le parebrise ou en fonction d'un régime de fonctionnement d'un organe d'éclairage ou d'un essuie-glace du véhicule.

Selon une étape 202, le système 100 reçoit aussi des données de localisation. Comme cela est généralement le cas, les données de localisation sont transmises par un système de positionnement par satellites et/ou une source de données hébergées sur un serveur distant. Ces données de localisation peuvent ainsi contenir des éléments de cartographie, des éléments d'information routière ou d'autres informations tels que des points d'intérêt ou des éléments de signalisation routière. Avantageusement, les données de localisation reçues par le système 100 ne vont pas au-delà des éléments d'information aujourd'hui disponibles et utilisés par les systèmes de navigation actuels.

Selon une étape 203, les données de localisation sont traitées en regard d'une tâche de prédiction à accomplir, notamment pour déterminer certains paramètres d'entrée qui alimentent le module d'apprentissage automatique 104. Lors de cette étape, le système 100 détermine notamment une date courante, une heure courante et/ou un lieu courant.

Selon une étape 204, le système 100 constitue des données d'identification relatives à au moins un passager du véhicule. Ces données d'identification concernent aussi bien le conducteur que, le cas échéant, les autres passagers du véhicule.

Pour une première partie, les données d'identification sont générées lorsque le système 100 interagit avec un dispositif d'identification portable que le conducteur utilise pour déverrouiller et démarrer le véhicule (e.g. télécommande, clef électronique, etc.). Alternativement, ou cumulativement, le système 100 constitue une autre partie des données d'identification en interagissant directement avec un smartphone, par exemple par le biais d'une liaison bluetooth mise à disposition par les moyens de transmission de signaux radiofréquences du véhicule. De manière avantageuse, le système 100 utilise ces moyens pour extraire les identifiants de certains appareils électroniques portables se trouvant à bord du véhicule, notamment des smartphones.

Sur la base de ces données, le système 100, est apte à déterminer certaines informations sur les passagers du véhicule, en particulier le nombre de passagers transportés. Avantageusement, ces données d'identification permettent aussi au système 100 de retrouver et extraire un profil utilisateur, par exemple stocké sur les moyens de stockage de données 102. Dans ce profil utilisateur, des informations définissent l'identité d'un passager tandis que d'autres sont relatives à son âge ou à son expérience de conduite.

Pour une autre partie, les données d'identification sont générées suite à l'émission d'un signal par au moins un deuxième capteur agencé dans le véhicule et configuré pour émettre un signal en fonction d'au moins une composante d'une condition physique du passager. Par exemple, lors de chaque trajet, des données d'identification sont générées selon les signaux reçus de capteurs qui sont aptes à émettre des signaux en fonction du pouls d'un passager, en fonction de la température corporelle d'un passager, en fonction du poids d'un passager, en fonction de l'état d'ébriété d'un passager et/ou en fonction du positionnement du regard d'un passager, notamment celui du conducteur. Lors d'une étape 205, les données de fonctionnement, les données de localisation et les données d'identification sont transmises au module d'apprentissage automatique 104. Dans un premier temps, ces données sont utilisées par le module d'apprentissage automatique 104 pour constituer une base d'entraînement. Progressivement, le module d'apprentissage automatique 104 bâtit un modèle prédictif qui s'affine au fur et à mesure. Pour ce faire, le système 100 met en œuvre, pour chaque trajet, une étape d'analyse des paramètres d'entrée, par exemple la date courante, l'heure courante ou le lieu courant, en regard d'une destination effectivement atteinte en fin de trajet.

Lors d'une étape 206, le système 100 utilise le modèle prédictif établi par le module d'apprentissage automatique 104 pour déterminer une suggestion de destination. Sur la base d'un ou plusieurs paramètres d'entrée courants, le module d'apprentissage automatique 104 retourne une suggestion de destination.

Selon un mode de réalisation plus particulier, le système 100 réalise parallèlement une étape supplémentaire au cours de laquelle la suggestion retournée par le module d'apprentissage automatique 104 est mise à jour en utilisant les données de localisation. Par ce mécanisme, le système 100 est à même de prendre en compte que, dans certains cas, les données de localisation priment sur les suggestions fournies par le module d'apprentissage automatique 104. C'est par exemple le cas lorsque, au fil du temps, le module d'apprentissage automatique 104 a appris que certains lieux de départ impliquent irrémédiablement certains lieux de destination (par exemple : « départ = travail » implique « destination = maison » ; « départ = école des enfants » implique « destination = travail »).

Lors d'une étape 207, le système 100 détermine au moins un paramètre distinctif en lien avec la suggestion déterminée au cours de l'étape 206. Pour ce faire, le système 100 réalise une étape qui consiste à faire varier un ou plusieurs paramètres d'entrée. En effet, en contrôlant si la prédiction retournée par le modèle prédictif du module d'apprentissage automatique 104, i.e. la suggestion, est impactée par des variations relatives de certains paramètres d'entrée, le système 100 peut déterminer au moins un paramètre distinctif qui influence la suggestion. Par exemple, le système détermine, relativement à une suggestion de destination, si celle-ci reste identique en faisant varier le paramètre d'entrée qui correspond à la date courante. Si, par exemple, une suggestion reste identique tous les jours de la semaine sauf le weekend, ou seulement tous les lundi matin, le système 100 détermine que le paramètre distinctif est lié à la date courante.

Lors d'une étape 207, le système 100 détermine la valeur représentative en utilisant le paramètre distinctif. Par exemple, lorsque le paramètre distinctif a trait à la date courante comme ci-dessus, le système 100 détermine qu'une valeur représentative pour ce paramètre distinctif correspond à une formulation verbale « tous les jours excepté le week-end » ou, selon un autre exemple, « tous les lundi matin ». D'autres valeurs représentatives peuvent cependant être envisagées. Ainsi, lorsque le paramètre distinctif a trait au lieu courant, on peut alors envisager que le système 100 détermine une valeur représentative qui correspond à une formulation verbale telle que « chaque fois que cet endroit est le lieu de départ ». De même, si le paramètre distinctif a trait au niveau de carburant dans le réservoir, le système 100 détermine une valeur représentative qui correspond à une formulation verbale telle que « à chaque fois que votre réservoir est presque vide ». Comme on l'a compris, la valeur représentative défini donc un paramètre de contexte en lien avec la suggestion.

Selon un mode réalisation plus particulier, le système 100 utilise la valeur représentative déterminée à l'étape 207 pour en déduire une indication contextuelle. Par exemple, l'indication contextuelle déterminée par le système 100 lors de cette étape peut correspondre à une suite de mots similaires aux formulations verbales mentionnées ci-dessus. Dans d'autres cas, l'indication contextuelle correspond à un ensemble de données numériques qui définissent une image, une vidéo et/ou un message audio.

Selon une autre étape, une fois l'indication contextuelle déterminée, celle-ci est transmise vers une interface de diffusion d'information. L'interface de diffusion d'information est configurée pour être apte à utiliser l'indication contextuelle et produire un élément signalétique, par exemple un message sonore ou une animation visuelle. De préférence, l'interface de diffusion d'information fait partie intégrante du système de navigation du véhicule. Alternativement, l'interface de diffusion d'information se présente sous la forme d'un appareil électronique indépendant agencé dans la console du véhicule et qui comprend un écran et/ou un haut-parleur. Dans d'autres cas encore, on peut imaginer que c'est l'une des interfaces de diffusion d'information d'un smartphone (e.g. écran, haut-parleurs) se trouvant à bord du véhicule qui est utilisée à ce stade par le système 100.

Le système 100 selon l'invention améliore donc considérablement son potentiel d'acceptation par l'utilisateur dans la mesure où il devient possible de fournir un système de navigation qui ne se contente pas d'apprendre les habitudes et proposer des destinations pertinentes mais qui est aussi en mesure de justifier les suggestions qu'il fournit. L'utilisateur, qui comprend mieux les cheminements et raisonnements mis en œuvre par les fonctionnalités d'intelligence artificielle est alors plus compréhensif vis-à-vis d'éventuelles erreurs et plus à l'écoute des progrès. Cette avancée en matière d'interface homme-machine dans le domaine de la navigation automobile repose sur le procédé et le système selon l'invention qui, tels que décrits ci-dessus, établissent un choix spécifique de paramètres et une manière particulière de traiter ces paramètres afin de tirer des résultats exploitables en lien avec le but d'amélioration recherché.

## Revendications

1. Procédé de détermination par un système informatique d'au moins une valeur représentative d'au moins un paramètre contextuel en regard d'une suggestion de destination fournie par un système de navigation pour un véhicule terrestre à moteur, comprenant les étapes de :
- constituer des données de fonctionnement, lesdites données de fonctionnement étant générées suite à l'émission d'au moins un signal par au moins un premier capteur agencé dans le véhicule et configuré pour émettre un signal en fonction d'un régime de fonctionnement du véhicule,
- recevoir des données de localisation, lesdites données de localisation étant fournies par un système de positionnement par satellites, permettant la détermination horodatée de la position géographique du véhicule,
- constituer des données d'identification relatives à au moins un passager du véhicule, lesdites données d'identification étant en partie générées suite à l'émission d'un signal par au moins un deuxième capteur agencé dans le véhicule et configuré pour émettre un signal en fonction d'au moins une composante d'une condition physique dudit passager,
- transmettre lesdites données de fonctionnement, lesdites données de localisation et lesdites données d'identification à un module d'apprentissage automatique qui, sur la base desdites données de fonctionnement, desdites données de localisation et desdites données d'identification, établit un modèle prédictif apte à traiter au moins un paramètre d'entrée,
- utiliser le modèle prédictif pour déterminer ladite suggestion, sur la base d'au moins un paramètre d'entrée,
- déterminer au moins un paramètre influençant la suggestion, appelé paramètre distinctif, en lien avec ladite suggestion,
- déterminer la valeur représentative en utilisant le paramètre distinctif,
dans lequel le procédé comprend une étape d'utilisation de la valeur représentative pour déterminer une indication contextuelle,
dans lequel le procédé comprend une étape d'interaction avec une interface de diffusion d'information apte à prendre en charge l'indication contextuelle pour produire un message sonore et/ou une animation, et dans lequel l'étape de détermination du paramètre distinctif comprend une étape consistant à faire varier le paramètre d'entrée.

2. Procédé selon la revendication 1, **caractérisé en ce que** ladite interface de diffusion d'information fait partie intégrante dudit système de navigation.

3. Procédé selon l'une des revendications précédentes, **caractérisé en ce que** l'étape d'utilisation du modèle prédictif comprend une étape d'utilisation des données de localisation pour mettre à jour ladite suggestion.

4. Procédé selon l'une des revendications précédentes, **caractérisé en ce que** le au moins un paramètre d'entrée est choisi parmi : une date courante, une heure courante ou une localisation courante.

5. Système informatique de détermination d'au moins une valeur représentative d'au moins un paramètre contextuel en regard d'une suggestion de destination fournie par un système de navigation pour un véhicule terrestre à moteur dans lequel sont agencés au moins un premier capteur configuré pour émettre un signal en fonction d'un régime de fonctionnement du véhicule, au moins un deuxième capteur configuré pour émettre un signal en fonction d'au moins une composante d'une condition physique d'un passager, un récepteur pour recevoir des données de localisation fournies par un système de positionnement par satellites et permettant la détermination horodatée de la position géographique du véhicule et un moyen d'émission et de réception de signaux radiofréquences pour communiquer avec un serveur distant et/ou un appareil électronique portable, **caractérisé en ce qu'**il comprend des moyens de mise en œuvre d'un procédé selon l'une quelconque des revendications précédentes.

6. Système selon la revendication précédente, **caractérisé en ce qu'**il comprend une unité de calcul, un module d'apprentissage automatique et des moyens de stockage dans lesquels sont stockés au moins un programme pour l'exécution d'étapes du procédé de détermination mis en œuvre par le système.

7. Véhicule terrestre à moteur, **caractérisé en ce qu'**il comprend un système selon l'une des revendications 5 ou 6.

8. Programme d'ordinateur comprenant des instructions pour l'exécution des étapes d'un procédé selon l'une quelconque des revendications 1 à 4.

## Patentansprüche

1. Verfahren zur Bestimmung mindestens eines Wertes, der für mindestens einen Kontextparameter repräsentativ ist, durch ein Computersystem in Bezug auf einen Zielvorschlag, der von einem Navigationssystem für ein Kraftfahrzeug bereitgestellt wird, mit folgenden Schritten:
- Betriebsdaten zu bilden, wobei die Betriebsdaten nach der Ausgabe mindestens eines Signals durch mindestens einen ersten Sensor erzeugt werden, der im Fahrzeug angeordnet ist und zur Ausgabe eines Signals in Abhängigkeit von einer Betriebsdrehzahl des Fahrzeugs konfiguriert ist,
- Standortdaten zu empfangen, wobei die Standortdaten von einem Satellitenortungssystem bereitgestellt werden, das eine mit einem Zeitstempel versehene Bestimmung der geografischen Position des Fahrzeugs ermöglicht,
- es sind Identifizierungsdaten in Bezug auf mindestens einen Fahrzeuginsassen zu bilden, wobei die Identifizierungsdaten teilweise erzeugt werden, nachdem ein Signal von mindestens einem zweiten Sensor ausgegeben wird, der im Fahrzeug angeordnet ist und so konfiguriert ist, dass er ein Signal in Abhängigkeit von mindestens einer Komponente eines physischen Zustands des Fahrzeuginsassen ausgibt,
- die Betriebsdaten, die Standortdaten und die Identifikationsdaten an ein maschinelles Lernmodul übermitteln, das auf der Grundlage der Betriebsdaten, der Standortdaten und der Identifikationsdaten ein Vorhersagemodell erstellt, das zur Verarbeitung mindestens eines Eingabeparameters geeignet ist,
- Verwendung des Vorhersagemodells zur Bestimmung des Vorschlags auf der Grundlage mindestens eines Eingabeparameters,
- Bestimmung mindestens eines Parameters, der den Vorschlag beeinflusst, des so genannten unterscheidungskräftigen Parameters, in Bezug auf den Vorschlag,
- Bestimmung des repräsentativen Wertes unter Verwendung des charakteristischen Parameters,
wobei das Verfahren einen Schritt umfasst, bei dem der Repräsentativwert verwendet wird, um eine kontextabhängige Anzeige zu bestimmen,
wobei das Verfahren einen Schritt der Interaktion mit einer Informationsverbreitungsschnittstelle umfasst, die die kontextabhängige Anzeige unterstützt, um eine akustische Nachricht und/oder eine Animation zu erzeugen, und
wobei der Schritt zur Bestimmung des unterscheidungskräftigen Parameters einen Schritt zur Änderung des Eingabeparameters umfasst.

2. Verfahren nach Anspruch 1, **dadurch gekennzeichnet, dass** die Informationsübertragungsschnittstelle ein integraler Bestandteil des Navigationssystems ist.

3. Verfahren nach einem der vorhergehenden Ansprüche, **dadurch gekennzeichnet, dass** der Schritt des Verwendens des Vorhersagemodells einen Schritt des Verwendens der Standortdaten umfasst, um den Vorschlag zu aktualisieren.

4. Verfahren nach einem der vorhergehenden Ansprüche, **dadurch gekennzeichnet, dass** der mindestens eine Eingabeparameter ausgewählt ist aus: einem aktuellen Datum, einer aktuellen Uhrzeit oder einem aktuellen Ort.

5. Computersystem zum Bestimmen wenigstens eines Wertes, der für wenigstens einen Kontextparameter repräsentativ ist, in Bezug auf einen Zielvorschlag, der von einem Navigationssystem für ein Kraftfahrzeug bereitgestellt wird, wobei wenigstens ein erster Sensor, der zum Senden eines Signals in Abhängigkeit von einem Betriebszustand des Fahrzeugs konfiguriert ist, wenigstens ein zweiter Sensor, der zum Senden eines Signals in Abhängigkeit von wenigstens einer Komponente eines physikalischen Zustands eines Fahrgastes konfiguriert ist, ein Empfänger zum Empfangen von Standortdaten, die von einem Satellitenpositionierungssystem bereitgestellt werden und die zeitgesteuerte Bestimmung der geografischen Position des Fahrzeugs ermöglichen, und ein Mittel zum Senden und Empfangen von Funkfrequenzsignalen zum Kommunizieren mit einem Server angeordnet sind Entfernte und/oder tragbare elektronische Vorrichtung, **dadurch gekennzeichnet, dass** sie Mittel zur Durchführung eines Verfahrens nach einem der vorhergehenden Ansprüche umfasst.

6. System nach dem vorhergehenden Anspruch, **dadurch gekennzeichnet, dass** es eine Recheneinheit, ein Modul zum automatischen Lernen und Speichermittel umfasst, in denen mindestens ein Programm zur Durchführung von Schritten des durch das System durchgeführten Bestimmungsverfahrens gespeichert ist.

7. Landmotorfahrzeug, **dadurch gekennzeichnet, dass** es ein System nach einem der Ansprüche 5 oder 6 umfasst.

8. Computerprogramm, das Befehle zum Ausführen der Schritte eines Verfahrens nach einem der Ansprüche 1 bis 4 umfasst.

## Claims

1. Method for determining by a computer system at least one value representative of at least one contextual parameter facing a destination suggestion provided by a navigation system for an engine land vehicle, comprising the steps of:
- constituting operating data, said operating data being generated following the emission of at least one signal by at least one first sensor arranged in the vehicle and configured to emit a signal as a function of an operating speed of the vehicle,
- receiving location data, said location data being provided by a satellite positioning system, enabling the time-stamped determination of the geographical position of the vehicle,
- constituting identification data relating to at least one passenger of the vehicle, said identification data being generated in part following the emission of a signal by at least one second sensor arranged in the vehicle and configured to emit a signal as a function of at least one component of a physical condition of said passenger,
- transmitting said operating data, said location data and said identification data to a machine learning module which, on the basis of said operating data, said location data and said identification data, establishes a predictive pattern capable of establishing at least one entry parameter,
- using the predictive model to determine said suggestion, on the basis of at least one entry parameter,
- determining at least one parameter influencing the suggestion, called distinctive parameter, in connection with said suggestion,
- determining the representative value using the distinctive parameter,
wherein the method comprises a step of using the representative value to determine a contextual indication,
wherein the method comprises a step of interaction with an information broadcasting interface capable of taking into load the contextual indication to produce a sound message and/or an animation, and
in which the step of determining the distinctive parameter comprises a step consisting in varying the parameter of entry.

2. Method as claimed in claim 1, wherein said information broadcasting interface forms an integral part of said navigation system.

3. Method as claimed in claim 1, wherein the step of using the predictive location comprises a step of using the data of the predictive model to update said suggestion.

4. Method according to claim 1, wherein the at least one entry parameter is selected from the previous group: a current date, a current time, or a current location.

5. Computer system for determining at least one value representative of at least one contextual parameter facing a destination suggestion provided by a navigation system for an engine land vehicle in which are arranged at least one first sensor configured to emit a signal as a function of an operating regime of the vehicle, at least one second sensor configured to emit a signal as a function of at least one component of a physical condition of a passenger, a receiver for receiving location data provided by a satellite positioning system and allowing the time-stamped determination of the geographical position of the vehicle and a means for emitting and receipt of radiofrequency signals for communicating with a remote server and/or a mobile phone electronic apparatus, **characterised in that** it comprises means for implementing a method according to any one of the previous claims.

6. System as claimed in claim 1, previous in that it comprises a compute unit, an automatic learning module and storage means in which are stored at least one plan for the execution of steps of the determination method implemented by the system.

7. Land vehicle with an engine, comprising a system according to one of claims 5 or 6.

8. Computer plan comprising instructions for executing the steps of a method according to any one of claims 1 to 4.
